# EUROPEAN PATENT SPECIFICATION

(11) **EP 3 389 394 B1**
(45) Date of publication and mention of the grant of the patent: **21.02.2024**
(21) Application number: 16875042.0
(22) Date of filing: 19.12.2016
(51) Int. Cl.: A23K 10/00, A23K 50/00, A23K 50/40, A23K 20/158, A23K 20/147

(54) **FOOD PRODUCT FOR REGULATING LIPID METABOLITES AND METHODS**
LEBENSMITTELPRODUKT ZUR REGULIERUNG VON LIPIDMETABOLITEN UND VERFAHREN
PRODUIT ALIMENTAIRE RÉGULANT LES MÉTABOLITES DES LIPIDES ET PROCÉDÉS ASSOCIÉS

(30) Priority: 17.12.2015 GB 201522302
(43) Date of publication of application: 24.10.2018
(73) Proprietor: Mars, Incorporated, McLean, VA 22101 (US)
(72) Inventor: ALLAWAY, David, Melton Mowbray Leicestershire LE14 4RT (GB); HEWSON-HUGHES, Adrian, Melton Mowbray Leicestershire LE14 4RT (GB)
(74) Representative: Cabinet Nony
(86) International application number: PCT/IB2016/057769
(87) International publication number: WO 2017/103900

(56) References cited:
- US-A1- 2003 086 869
- US-A1- 2008 057 152
- US-A1- 2012 122 981
- US-A1- 2012 122 981
- US-A1- 2014 044 825
- REBECCA J ANGELL ET AL: "Fish oil supplementation maintains adequate plasma arachidonate in cats, but similar amounts of vegetable oils lead to dietary arachidonate deficiency from nutrient dilution", NUTRITION RESEARCH, ELSEVIER INC, XX, vol. 32, no. 5, 16 March 2012 (2012-03-16) , pages 381-389, XP028510085, ISSN: 0271-5317, DOI: 10.1016/J.NUTRES.2012.03.008 [retrieved on 2012-03-21]
- BENJAMIN JENKINS ET AL: "A Review of Odd-Chain Fatty Acid Metabolism and the Role of Pentadecanoic Acid (C15:0) and Heptadecanoic Acid (C17:0) in Health and Disease", MOLECULES, vol. 20, no. 2, 30 January 2015 (2015-01-30), pages 2425-2444, XP055258173, DOI: 10.3390/molecules20022425
- JENKINS, B et al.: "A Review of Odd-Chain Fatty Acid Metabolism and the Role of Pentadecanoic Acid (C15:0) and Heptadecanoic Acid (C17:0) in Health and Disease.", Molecules, vol. 20, January 2015 (2015-01), pages 2425-2444, XP055258173,
- LAFLAMME D. et al.: "Increased Dietary Protein Promotes Fat Loss and Reduces Loss of Lean Body Mass During Weight Loss in Cats.", Intern. J. Appl. Res. Vet. Med., vol. 3, no. 2, 2005, pages 62-68, XP055392507,
- FAO CORPORATE DOCUMENT REPOSITORY.: "Food energy - methods of analysis and conversion factors.", Calculation of the energy content of foods - energy conversion factors., 6 January 2015 (2015-01-06), XP009511505, Retrieved from the Internet: URL:https://web.archive.org/web/2015010623 4618/ http://www.fao.org/docrep/006/y5022e/y5022 e04. htm
- VENN-WATSON, S et al.: "Increased Dietary Intake of Saturated Fatty Acid Heptadecanoic Acid (C17:0) Associated with Decreasing Ferritin and Alleviated Metabolic Syndrome in Dolphins", PLoS ONE, vol. 10, no. 7, July 2015 (2015-07), pages 1-17, XP055392515,

## Description

The present disclosure relates to methods of determining the levels of endogenous margaric acid before and after a meal in a companion animal, wherein the meal is a pet foodstuff having a particular protein to fat ratio, which is useful in increasing the endogenous levels of margaric acid post-prandially and having the beneficial effects as described herein. The pet foodstuff comprises a ratio of protein to fat of 1:0.27 to 1:0.63 on a gram:gram as fed or dry matter basis. The disclosure also relates to methods of determining levels of lipid metabolites, such as palmitic acid, diacylglycerol (DAG), triacylglycerols (TAGs) and ceramides before and after a meal in a companion animal, wherein the meal is a pet foodstuff having a particular protein to fat ratio, which is useful in controlling, regulating and stabilizing lipid metabolites post-prandially to prevent and/or reduce lipotoxicity in the companion animal. The pet foodstuff described is fed to a companion animal for use increasing the endogenous margaric acid levels and/or for use in preventing and/or reducing lipotoxicity in a companion animal. The present disclosure also relates to methods of feeding the pet foodstuff described and/or dietary regimes to provide the companion animal with the benefit of increasing the endogenous margaric acid levels and/or for use in preventing and/or reducing lipotoxicity in a companion animal.

Many of the symptoms and complications of type 2 diabetes mellitus are recognized to be the result of abnormal glucose metabolism. Increasing evidence points to the importance of dyslipidaemia (e.g. hypertriglyceridaemia) and lipotoxicity as key factors underlying the development of insulin resistance and type 2 diabetes mellitus. (Lee et al 1994, Rhee et al 2011, Savage et al 2007, Schaffer 2003, Unger et al 2010).

Specialised cells of white adipose (fat) tissue (i.e. adipocytes) have a unique capacity to accumulate excess free fatty acids (FFAs) and store them as triglycerides (triacylglycerols, TAGs), cells of non-adipose tissues (e.g. skeletal muscle, liver, pancreas, heart) have a limited capacity for such storage of lipids. High plasma FFAs and triglyceride levels lead to increased import of FFAs into non-adipose tissues contributing to intracellular lipid accumulation. Once the TAG storage capacity of these cells is saturated, reactive lipids such as diacylglycerol (DAG) may accumulate and/or the FFAs may be directed towards non-oxidative pathways resulting for example in an increase in ceramide formation. These reactive lipid derivatives can accumulate in tissues such as skeletal muscle, liver, pancreas, kidney and heart leading to lipotoxicity, a process that contributes to the development of various morbidities including insulin resistance, type 2 diabetes, heart failure, kidney failure, liver failure depending on the organ system(s) affected by lipid overload (Schaffer 2003, Slawik & Vidal-Puig 2006).

Further, margaric acid (an odd chain length saturated fatty acid, (OCS-FA)) is another lipid metabolite which is normally associated with food intake, in particularly dairy fat intake. Margaric acid has been identified as a marker associated with lower risk/incidence of insulin resistance, type 2 diabetes, inflammation and coronary heart disease in humans.

Angell et al., 2012 (Nutrition Research, Vol. 32 (5): 381-389)) relates to the effects of dietary fish and vegetable oil supplementation on plasma lipids content and levels, and more particularly on arachidonic acid. This document discloses an experimental study in which cats are fed with different food compositions enriched in oil supplements. The amount of different plasma lipids is measured at different time points.

Jenkins et al., 2015 (Molecules, Vol. 20 (2) : 2425-2444) relates to odd-chain fatty ("OCS-FAs") acid metabolism, particularly of pentadecanoic acid (C15:0) and heptadecanoic acid (C17:0), in human. This document discloses that both C15:0 and C17:0 have an association with reduced risk for developing multiple sclerosis, or that their concentrations showed a significant inverse association with coronary heart disease (CHD) incidence or with Type 2 diabetes ("T2D") disease risk.

US 2012/122981 relates to biomarkers correlated to glucose disposal and/or insulin resistance. Margaric acid is cited among the considered biomarker. It is proposed to use those biomarkers in methods for monitoring the efficacy of insulin resistance treatment or in methods for screening compositions for activity in modulating biomarkers of insulin resistance and related disorders.

The most marked changes in the levels of nutrients and their metabolites in the blood occur following food intake (i.e. in the post-prandial period). Ingestion of food typically results in an initial increase in circulating levels of nutrients in the blood as they are absorbed from the gastrointestinal tract which then gradually decline as the various homeostatic mechanisms of the body stimulate uptake into cells so they can be metabolised. The level to which different nutrients and their metabolites increase depends at least in part on the amounts consumed in the food but there may also be interactions between different nutrients that impacts on how they are metabolised and that may alter their post-prandial time course profile.

Post-prandial plasma levels of a number of lipid metabolites including palmitic acid, diacylglycerol (DAG), triacylglycerols (TAGs) and ceramides are important as increased levels are associated with detrimental effects on health, whereas a decrease and/or stabilization in the post-prandial levels of these metabolites provides beneficial effects on the health of a mammal, in particular humans.

In addition to acute post-prandial changes in nutrient and metabolites levels, there may also be changes which occur over a longer time frame as a result of longer-term intake of certain diets. Such longer-term changes may require the up-regulation of particular enzyme pathways that may be initiated by the intake of a particular combination of dietary nutrients providing appropriate substrate for the endogenous formation of nutrient metabolites. For example, margaric acid is a fatty acid that is present in dairy fat although recent evidence raises the prospect that margaric acid may be synthesised endogenously in the absence of dairy fat intake. Increased margaric acid levels have been linked to lowering the risk of conditions such as type 2 diabetes, coronary heart disease and inflammation.

There is a need to develop and provide diets or pet food products which aid companion animals in maintaining a "healthy" post-prandial homeostasis and which provide a benefit to the animal's health and well-being.

The invention relates to a method for diagnosis that a pet foodstuff provides an increase of endogenous margaric acid level in a cat, said method comprising the steps of: (a) feeding a cat a foodstuff comprising a protein to fat ratio of 1:0.27 to 1 :0.63 on a gram:gram as fed or dry matter basis, and (b) measuring the level of margaric acid in a blood sample from the cat before and after feeding the foodstuff, wherein an increase in endogenous margaric acid levels post-prandially is indicative of a foodstuff in preventing and/or reducing the risk of coronary heart disease, type 2 diabetes and/or inflammation in the cat.

The invention relates to a method comprising the steps of: (a) feeding a companion animal, preferably a cat, a foodstuff comprising a protein to fat ratio of 1 :0.27 to 1 :0.63 on a gram:gram as fed or dry matter basis, and (b) measuring the level of margaric acid in a blood sample from the companion animal before and after feeding the foodstuff, wherein an increase in endogenous margaric acid levels post-prandially is indicative of a foodstuff for use in preventing and/or reducing the risk of coronary heart disease, type 2 diabetes and/or inflammation in the companion animal.

The levels of margaric acid are measured at least once between an hour or immediately before the foodstuff is fed to the companion animal, preferably the cat, and at least once between at least 30 minutes to 5 hours after the foodstuff has been fed to the companion animal, preferably a cat.

The foodstuff may have a protein to fat ratio is about 1:0.33 to 1:0.55 on a gram:gram as fed or dry matter basis. The foodstuff may have a protein to fat ratio of about 1:0.45 on a gram:gram as fed or dry matter basis. The foodstuff may have a protein to fat ratio of about 1:0.37 on a gram:gram as fed or dry matter basis. The foodstuff, is preferably a nutritionally balanced pet foodstuff.

The method further comprises a step of formulating a foodstuff comprising a protein to fat ratio of 1:0.27 to 1 :0.63 on a gram:gram as fed or dry matter basis occurs prior to the step of feeding the companion animal (i.e. cat) the foodstuff.

In some embodiments, the pet foodstuff comprises a ratio of protein:fat of 1:0.27 to 1:0.63 on a gram:gram as fed or dry matter basis and is for use in increasing the endogenous levels of margaric acid in a companion animal. An increase in endogenous levels of margaric acid prevents and/or reduces the risk of coronary heart disease, type 2 diabetes and/or inflammation in the companion animal.

In some embodiments, the disclosure relates to a method of increasing the endogenous levels of margaric acid in a companion animal, wherein the companion animal is fed a pet foodstuff comprising a ratio of protein:fat of 1:0.27 to 1:0.63 on a gram:gram as fed or dry matter basis. An increase in endogenous levels of margaric acid prevents and/or reduces the risk of coronary heart disease, type 2 diabetes and/or inflammation in the companion animal.

In some embodiments, the foodstuff comprises a ratio of protein:fat of 1:0.27 to 1:0.63 on a gram:gram as fed or dry matter basis for use in preventing and/or reducing lipotoxicity in a companion animal. A reduction or prevention in lipotoxicity prevents and/or reduces the risk of insulin resistance or the risk of adipose tissue and skeletal muscle inflammation in the companion animal and/or prevents and/or reduces the risk of impaired neurological function and/or nerve cell damage or cell death in the companion animal.

In some embodiments, the disclosure relates to a method of preventing and/or reducing lipotoxicity in a companion animal, wherein the companion animal is fed a pet foodstuff comprising a ratio of protein:fat of 1:0.27 to 1:0.63 on a gram:gram as fed or dry matter basis. A reduction or prevention in lipotoxicity prevents and/or reduces the risk of insulin resistance or the risk of adipose tissue and skeletal muscle inflammation in the companion animal and/or prevents and/or reduces the risk of impaired neurological function and/or nerve cell damage or cell death in the companion animal.

The pet foodstuff for use and/or used in the methods described is a complete and nutritionally balanced pet foodstuff. The companion animal is a dog or a cat, preferably a cat.

The pet foodstuff may further comprise one or more nutrients selected from group (a) and group (b), wherein the nutrients in group (a) are aspartic acid, serine, glutamic acid, glycine, alanine or proline and the nutrients in group (b) are myristic acid, palmitic acid, stearic acid, palmitoleic acid, oleic acid or linolenic acid. Preferably the pet foodstuff comprises one nutrient from group (a) and one nutrient from group (b) and comprises a ratio of 1:0.006 to 1:4.5 on a gram:gram as fed or dry matter basis or the pet foodstuff comprises two nutrients selected from group (a) and two nutrients selected from group (b) and comprises a ratio of 1:0.014 to 1:3.5 on a gram:gram as fed or dry matter basis or the pet foodstuff comprises three nutrients selected from group (a) and three nutrients selected from group (b) and comprises a ratio of 1:0.025 to 1:2.5 on a gram:gram as fed or dry matter basis.

In some embodiments, the disclosure also relates to a dietary regime for feeding a companion animal for use in preventing and/or reducing lipotoxicity and/or increasing the endogenous levels of margaric acid, wherein the companion animal is fed a combination of at least two pet foodstuffs, wherein one pet foodstuff is wet or dry and comprises a ratio of protein:fat of 1:0.27 to 1:0.63 on a gram:gram as fed or dry matter basis and the second pet foodstuff is wet or dry and comprises a protein:fat of 1:0.27 to 1:0.63 on a gram:gram as fed or dry matter basis, wherein when combined the companion animal is fed an overall ratio of protein:fat of 1:0.27 to 1:0.63 on a gram:gram as fed or dry matter basis.

The present inventors have discovered that the content and proportions of dietary protein and fat in a meal have an impact on certain plasma metabolite profiles through a post-prandial time-course. The present inventors have discovered that intake of a food with a certain protein to fat ratio over a period of two weeks results in an increase in endogenous levels of margaric acid, a fatty acid associated with health benefits. Such health benefits can aid in the reduction and/or prevention of conditions such as insulin resistance, type 2 diabetes, Coronary Heart Disease(CHD), adipose tissue and skeletal muscle inflammation, impaired neurological function and/or neuro-inflammatory and neurodegenerative disorders. The present inventors have also determined that certain plasma metabolites can be controlled, regulated and/or stabilised in the post-prandial state by the protein to fat ratio of a meal that is ingested. The control, regulation and stabilisation of these certain metabolites (such as triacylglycerols, diacylglycerol, palmitic acid and ceramides) provide the animal with established health benefits as a result of a reduction and/or prevention in lipotoxicity.

The disclosure relates to a method of increasing margaric acid levels, in particular endogenous margaric acid levels, in a companion animal before and after a meal in a companion animal, wherein the meal is a pet foodstuff having a particular protein to fat ratio which is useful in increasing the margaric acid levels, in particular endogenous levels, post-prandially and having the beneficial effects as described herein.

The method of the invention comprises the following steps a) feeding a companion animal a foodstuff comprising a protein to fat ratio of 1:0.27 to 1:0.63 on a gram:gram as fed or dry matter basis, and (b) measuring the level of margaric acid in a blood sample from the companion animal before and after feeding the foodstuff, wherein an increase in margaric acid levels post-prandially (in particular endogenous margaric acid levels) is indicative of a foodstuff for use in preventing and/or reducing the risk of coronary heart disease, type 2 diabetes and/or inflammation in the companion animal.

The purpose of the method of the invention is to provide a diagnosis that the pet foodstuff is the factor providing the effect of increasing the endogenous margaric acid levels in the companion animal and thus such pet foodstuff can be useful in preventing and/or reducing the risk of coronary heart disease, type 2 diabetes and/or inflammation

The pet foodstuff used in the present invention comprises a ratio of protein to fat of 1:0.27 to 1:0.63 on a gram: gram as fed or dry matter basis.

Margaric acid (an odd chain length saturated fatty acid, (OCS-FA), also known as heptadecanoic acid CH₃(CH₂)₁₅COOH) is a lipid metabolite which is associated with food intake, in particularly dairy fat intake.

Margaric acid has been identified as a marker associated with lowering the risk/incidence of insulin resistance, type 2 diabetes, inflammation and coronary heart disease.

The inventors have surprisingly discovered that feeding a companion animal the pet foodstuff having a protein to fat ratio of 1:0.27 to 1:0.63 on a gram: gram as fed or dry matter basis, as described herein, (i.e. a foodstuff which has low levels of fat and thus the intake of fat is effectively low) is beneficial in increasing the endogenous margaric acid levels in companion animals.

Endogenous means that the body of the companion animal produces the margaric acid internally. The margaric acid is not obtained from the food intake; it is produced internally by the companion animal.

The present invention is useful in increasing endogenous production of the beneficial lipid, margaric acid, post-prandially in a companion animal.

The inventors have demonstrated that when an animal is fed a pet foodstuff having a protein to fat ratio of 1:0.27 to 1:0.63 on a gram:gram as fed or dry matter basis, as described, the levels of endogenous margaric acid are surprisingly increased. It has also been shown that feeding the pet foodstuff as described to a companion animal, in particular to a cat, that post-prandial levels of margaric acid (in particular endogenous margaric acid) are surprisingly increased, even though the companion animal has not been fed any dairy and the fact that the foodstuff has a low fat intake.

The inventors have shown that the pet foodstuff as described is beneficial to the companion animal. An increase in the endogenous margaric acid levels has been shown to be associated with lowering the risk/incidence of insulin resistance, type 2 diabetes, inflammation and coronary heart disease.

The present disclosure relates, for all aspects, to any companion animal. In particular, the present disclosure relates to a companion animal such as a dog or a cat. In particular, the companion animal is a cat.

The pet foodstuff may comprise a ratio of protein to fat on a gram:gram as fed or dry matter basis that may range from 1:0.27 to 1:0.63, 1:0.28 to 1:0.62, 1:0.29 to 1:0.61, 1:0.30 to 1:0.60, 1:0.31 to 1:0.59, 1:0.32 to 1:0.58, 1:0.33 to 1:0.57, 1:0.34 to 1:0.56, 1:0.35 to 1: 0.55, 1:0.36 to 1:0.54, 1:0.37 to 1:0.53, 1:0.38 to 1:0.52, 1:0.39 to 1:0.51, 1:0.40 to 1:0.50, 1:0.41 to 1:0.49, 1:0.42 to 1:0.48, 1:0.43 to 1:0.47, 1:0.44 to 1:0.46, and/or combinations thereof. The pet foodstuff may preferably comprise a protein to fat ratio ranging from 1:0.33 to 1:0.55 on a gram:gram as fed or a dry matter basis. The pet foodstuff may comprise a protein to fat ratio selected from 1:0.27, 1:0.28, 1:0.29, 1:0.30, 1:0.31, 1:0.32, 1:0.33, 1:0.34, 1:0.35, 1:0.36,1:0.37,1:0.38, 1:0.39, 1:0.40, 1:0.41, 1:0.42, 1:0.43, 1:0.44, 1:0.45, 1:0.46, 1:0.47, 1:0.48, 1:0.49, 1:0.50, 1:0.51, 1:0.52, 1:0.53, 1:0.54, 1:0.55, 1:0.56, 1:0.57, 1:0.58, 1:0.59, 1:0.60, 1:0.61, 1:0.62, or 1:0.63 gram:gram as fed or dry matter basis. The pet foodstuff may preferably has a protein to fat ratio of about and/or approximately 1:0.45 on a gram:gram as fed or dry matter basis, most preferably the foodstuff has a protein to fat ratio of about and/or approximately 1:0.37 on a gram: gram as fed or dry matter basis.

The pet foodstuff can consist of a protein to fat ratio of about 1:0.33 to 1:0.55 on a gram:gram as fed or dry matter basis.

The pet foodstuff can preferably consist of a protein to fat ratio of about 1:0.45 on a gram:gram as fed or dry matter basis or most preferably of a protein to fat ratio of about 1:0.37 on a gram:gram as fed or dry matter basis.

The pet foodstuff can be a complete and nutritionally balanced pet food product.

The foodstuff can be any type which is consumed by the companion animal, such as dry product, semi moist product, wet food product or a liquid and includes any food supplement, snack or treat. This includes standard food products including liquids, as well as pet food snacks (for example, snack bars, pet chew, crunchy treat, cereal bars, snacks, biscuits and sweet products).

Preferably, the pet foodstuff may be in the form of a dry foodstuff or wet foodstuff. The foodstuff is, in particular, a nutritionally balanced food product and/or food supplement, for example a pet product and/or pet supplement.

The pet foodstuff is preferably a pet product. Such a product is a preferably sold as a product for feeding /administering to a companion animal, in particular to a cat or dog.

The content of protein and/or fat in the pet foodstuff as described can be any measure and/or weight percentage of the pet foodstuff desired, provided that the final ratio of protein to fat is of 1:0.27 to 1:0.63 gram:gram as fed basis or dry matter basis.

A typical dry pet foodstuff contains about 10-40% crude protein and about 5-40% fat, the remainder being carbohydrate, including dietary fibre and ash. A typical wet or moist product contains (on a dry matter basis) about 40% fat, 50% protein and the remainder being fibre and ash. The foodstuff of the invention may be a dry product (with approximately 5 to approximately 15% moisture), a semi-moist product (with approximately 15 to approximately 70% moisture) or a wet product (with approximately 70 to approximately 90% moisture).

As described above, the content of protein and/or fat in the pet foodstuff as described can be any measure and/or weight percentage of the pet foodstuff desired, provided that the final ratio of protein to fat is of 1:0.27 to 1 :0.63 as fed basis or dry matter basis. For example, the pet foodstuff may be a wet foodstuff comprising a ratio of protein to fat on a gram:gram as fed ranging from 1:0.27 to 1:0.63, wherein the content of protein is 10g/100g as fed basis then the content of fat can be 2.7g/100g to 6.3g/100 as fed basis, most preferably 4.5g/100g as fed basis. For example, the pet foodstuff may be a dry pet foodstuff comprising a ratio of protein to fat on a gram:gram as fed or dry matter basis ranging from 1:0.27 to 1:0.63, wherein the content of protein is 32 g/100g on an as fed basis then the content of fat can be 8.6g/100g to 20.2g/100g on an as fed basis, most preferably about 14.4 g/100g as fed basis.

The foodstuff is preferably a cooked product. It may incorporate meat or animal derived material (such as beef, chicken, turkey, lamb, fish, blood plasma, marrow bone etc. or one or more thereof). The product alternatively may be meat free (preferably including a meat substitute such as soya, maize gluten or a soya product) in order to provide a protein source. The foodstuff may contain additional protein sources such as soya protein concentrate, milk proteins, gluten etc. The foodstuff may also contain a fat source such as one or more of chicken fat, turkey fat, beef fat, duck fat, pork fat, lamb fat, etc., fish oil, sunflower oil, vegetable oil, etc. The foodstuff may also contain a starch source such as one or more grains (e.g. wheat, corn, rice, oats, barley etc.), or may be starch free.

The foodstuff as described may be used alone or may be used in combination with a complete and balanced food which provides all the recommended vitamins and minerals for the companion animal in question, for example, as described in National Research Council, 2006, Nutrient Requirements for Dogs and Cats, National Academy Press, Washington DC (ISBN:0-309-08628-0); or Association of American Feed Control Officials, Official Publication2015.

The present description includes a method for preparing the pet foodstuffs described herein. The process for the manufacture of the foodstuff described herein can be made according to any method known in the art.

The remaining components of the foodstuff are not essential to the invention and typical standard products can be included. The combined ingredients of the foodstuff can provide all of the recommended vitamins and minerals for the particular animal in question (a complete and balanced food).

The pet foodstuff may include one or more nutrients selected from group (a) and group (b), wherein the nutrients in group (a) are aspartic acid, serine, glutamic acid, glycine, alanine or proline and the nutrients in group (b) are myristic acid, palmitic acid, stearic acid, palmitoleic acid, oleic acid or linolenic acid.

For example, the table below sets out the two sets of nutrient groups, as described:

| Group A | Group B |
|---|---|
| Aspartic Acid | Myristic Acid |
| Serine | Palmitic Acid |
| Glutamic Acid | Stearic Acid |
| Glycine | Palmitoleic Acid |
| Alanine | Oleic Acid |
| Proline | Linolenic Acid |

The pet foodstuff may be any combination of nutrients from group (a) and group (b). The pet foodstuff may comprise aspartic acid, serine, glutamic acid, glycine, alanine or proline or any combination thereof and myristic acid, palmitic acid, stearic acid, palmitoleic acid, oleic acid or linolenic acid or any combination thereof.

The pet foodstuff may include one nutrient from group (a) (i.e. are aspartic acid, serine, glutamic acid, glycine, alanine or proline) and one nutrient from group (b) (i.e. myristic acid, palmitic acid, stearic acid, palmitoleic acid, oleic acid or linolenic acid). In particular, when the pet foodstuff comprises one nutrient from each of group (a) and (b), the nutrients can be provided in a ratio of the group (a) nutrient to the group (b) nutrient of 1:0.006 to 1:4.5 on a gram:gram as fed or dry matter basis.

The pet foodstuff may include two nutrients from group (a) (i.e. are aspartic acid, serine, glutamic acid, glycine, alanine or proline) and two nutrients from group (b) (i.e. myristic acid, palmitic acid, stearic acid, palmitoleic acid, oleic acid or linolenic acid). In particular, when the pet foodstuff comprises two nutrient from each of group (a) and (b), the nutrients can be provided in a ratio of the group (a) nutrient to the group (b) nutrient of 1:0.014 to 1:3.5 on a gram:gram as fed or dry matter basis.

The pet foodstuff may include three nutrients from group (a) (i.e. are aspartic acid, serine, glutamic acid, glycine, alanine or proline) and three nutrients from group (b) (i.e. myristic acid, palmitic acid, stearic acid, palmitoleic acid, oleic acid or linolenic acid). In particular, when the pet foodstuff comprises one nutrient from each of group (a) and (b), the nutrients can be provided in a ratio of the group (a) nutrient to the group (b) nutrient of 1:0.025 to 1:2.5 on a gram:gram as fed or dry matter basis.

Blood samples are taken from the companion animal, at least once before a meal and one or more times after the meal. In particular, the blood samples can be taken one or more Blood samples are taken from the companion animal, at least once before a meal and one or more times after the meal. In particular, the blood samples can be taken one or more times after the meal at chosen intervals between at least 30 minutes to 5 hours after the meal (for example: every 15 minutes, every 30 minutes, every hour or at 15 minutes, 60 minutes, 120 minutes and 300 minutes following the end of the 20 minute meal). The meal referred herein is the pet foodstuff described having the particular protein to fat levels. Each blood sample taken from the companion animal is tested using standard assays, known in the art, to determine the concentration levels of endogenous margaric acid. The timed intervals at which the samples are taken and the endogenous margaric acid concentrations measured are not to be strictly timed and are approximate in time.

The endogenous margaric acid concentration levels in the blood sample post prandially (i.e. after the companion animal has been fed the meal comprising the particular protein to fat ratio as described herein) are increased when compared with the margaric acid measurement taken when the companion animal is fed a meal having a protein to fat ratio other than the particular protein to fat ratio as described herein. In particular, the margaric acid concentrations are significantly increased when compared to the measurements taken when the companion animal is fed a foodstuff not having the particular protein to fat ratio as described herein.

Feeding a companion animal, in particular a cat, a pet foodstuff having the particular protein to fat ratio as described herein, increases the margaric acid levels significantly, in particular the endogenous margaric acid levels, compared to the levels of margaric acid levels measured when the companion animals are fed other diets not having the particular protein to fat ratios as described herein. Feeding a companion animal a pet foodstuff having the protein to fat ratio as described herein, increases the endogenous margaric acid levels in the companion animal and thus provides the companion animal with beneficial health effects such preventing and/or reducing the risk of coronary heart disease, type 2 diabetes and/or inflammation in the companion animal.

The method can include the step of preparing the pet foodstuffs used in the present invention. The process for the manufacture of the foodstuff used in the present invention can be made according to any method known in the art.

The method of the invention as described can also include a step of formulating the foodstuff comprising a protein to fat ratio of 1:0.27 to 1 :0.63 on a gram:gram as fed or dry matter basis (as described herein) which occurs prior to the step of feeding the cat the foodstuff.

The pet foodstuff can be also be used in the form of a dietary regime, wherein the dietary regime comprises a wet foodstuff and dry foodstuff that enables the companion animal to achieve the particular protein:fat ratio as described herein through the consumption of both the wet and dry foodstuffs. Each of the wet and dry foodstuffs have a protein:fat ratio within the range 1:0.27 to 1:0.63 on a gram:gram as fed or dry matter basis.

The foodstuffs may be provided at the same time, to enable the animal to eat both types of foodstuff at the same meal to achieve the particular protein to fat ratio as described herein through the consumption of both the wet and dry foodstuffs. Alternatively, the wet food, for example, may be provided in the morning and the dry foodstuff may be provided as a separate meal in the afternoon or evening, meaning that in the course of 24 hours, the animal will achieve the particular protein:fat ratio as described herein.

The preferred protein:fat ratio may be achieved by the consumption of only the wet food or only the dry food or through a combination of the wet and the dry foodstuff provided to the companion animal. With the foods provided in the dietary regime, the preferred protein:fat ratio (1:0.27 to 1:0.63 gram:gram as fed or dry matter basis) may be achieved by the companion animal self-selecting the required amounts of each of the wet and/or dry foodstuffs provided to it.

The levels of margaric acid can be measured at beginning of the day, prior to the companion animal being fed and post-prandially after the first meal of the day to obtain one measurement and then again prior to the companion animal being fed the second meal of the day and post-prandially after the second meal of the deal to obtain a second reading. Each of the wet and dry foodstuffs have a protein:fat ratio within the range 1:0.27 to 1:0.63 on a gram:gram as fed or dry matter basis, so the margaric acid levels will have increased post-prandially after both the first and second meal.

The disclosure also provides a kit comprising a first package comprising a wet foodstuff and second package comprising a dry foodstuff for use in such a dietary regime. Each of the wet and dry foodstuffs have a protein:fat ratio within the range 1:0.27 to 1:0.63 on a gram:gram as fed or dry matter basis and/or below or above the range 1:0.27 to 1:0.63 on a gram:gram as fed or dry matter basis and wherein when combined provide the protein:fat ratio within the range 1 :0.27 to 1 :0.63 on a gram:gram as fed or dry matter basis.

The disclosure relates to a method of determining levels of lipid metabolites, such as palmitic acid, diacylglycerol (DAG), triacylglycerols (TAGs) and ceramides before and after a meal in a companion animal, wherein the meal is a pet foodstuff having a particular protein to fat ratio, which is useful in controlling, regulating and stabilizing lipid metabolites post-prandially to prevent and/or reduce lipotoxicity in the companion animal.

The inventors have surprisingly discovered that feeding a companion animal a pet foodstuff having a protein to fat ratio of 1 :0.27 to 1 :0.63 on a gram: gram as fed or dry matter basis is beneficial in preventing and/or reducing lipotoxicity in companion animals.

Lipotoxicity is a metabolic syndrome that results from the accumulation of lipid intermediates in non-adipose tissue, leading to cellular dysfunction and death. The tissues normally affected include the kidneys, liver, heart and skeletal muscle.

Lipotoxicity contributes to the development of various conditions including insulin resistance, type 2 diabetes, heart failure, kidney failure, liver failure as the fat is accumulated in the body.

The present invention is useful in controlling, regulating, stabilising post-prandial lipid metabolites in a companion animal. Controlling, regulating and stabilising post -prandial metabolites relates and includes to the control and regulation of homeostasis of metabolites pre and post ingesting a meal. Regulating, controlling and stabilising means that the levels of metabolites pre and post a meal are significantly maintained and balanced. Maintaining, controlling, regulation and stabilising post prandial metabolites is beneficial as it allows the body of the animal to re-establish the pre-meal state norm more quickly (i.e. a reduction in the time required to obtain homeostasis).

The present disclosure demonstrates that there is a correlation in reducing lipotoxicity by controlling, regulating and stabilizing lipid metabolites. The present inventors have shown that lipid metabolites, such as palmitic acid (saturated free fatty acid), diacylglycerol (DAG), tricylglycerols (TAG) and ceramides are reduced post-prandially when an animal is fed a pet foodstuff, as described, having a protein to fat ratio of 1 :0.27 to 1 :0.63 on a gram:gram as fed or dry matter basis.

The inventors have shown that reducing lipotoxicity is beneficial to the companion animal.

A reduction in lipotoxicity has been shown to be correlated in reducing and/or preventing the risk in insulin resistance, type 2 diabetes, Coronary Heart Disease(CHD), adipose tissue and skeletal muscle inflammation, impaired neurological function and/or neuro-inflammatory and neurodegenerative disorders.

Reducing lipotoxicity is beneficial in reducing the risk of or preventing insulin resistance, type 2 diabetes, Coronary Heart disease, adipose tissue and skeletal muscle inflammation, impaired neurological function and/or neuro-inflammatory and neurodegenerative disorders in companion animals. This has been shown by the unexpected reduction of post-prandial levels of lipid metabolites in blood plasma in companion animals.

The pet foodstuff described is for use in preventing and/or reducing lipotoxicity in a companion animal, in particular a cat. A reduction or prevention in lipotoxicity prevents and/or reduces the risk of insulin resistance or the risk of adipose tissue and skeletal muscle inflammation in the companion animal. Alternatively or additionally, a reduction or prevention in lipotoxicity prevents and/or reduces the risk of impaired neurological function and/or nerve cell damage or cell death in the companion animal.

Preferred features of the first aspect of the disclosure apply as for the second aspect of the disclosure *mutatis mutandis.*

### EXAMPLES & FIGURES

The invention will now be further described by way of reference to the following Examples and Figures, which are provided for the purpose of illustration only and are not to be construed as being limiting on the invention, which is defined by the method of the claims.

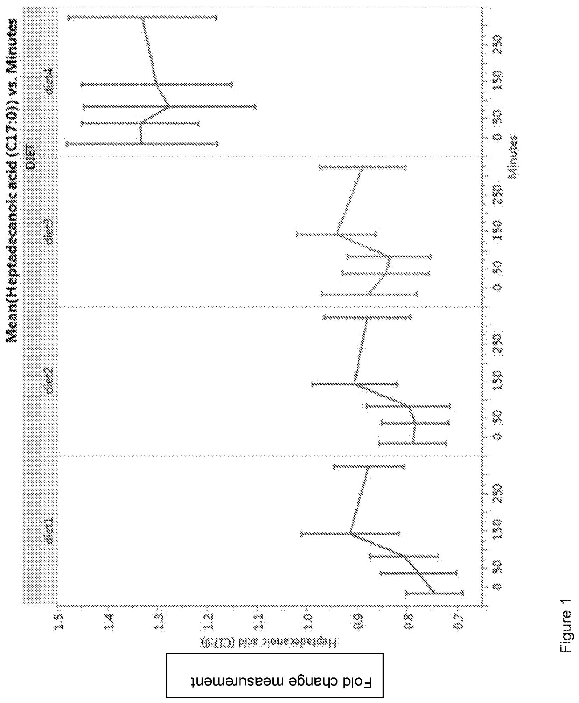

Figure 1: Graph showing plasma levels of margaric acid in cats fed the diets. The graph shows that cats fed Diet 4 (having P:F of 1:0.37 gram:gram as fed or dry matter basis) obtained increased post-prandial plasma levels of endogenous margaric acid compared to the other diets. The y axis is a fold change measurement.

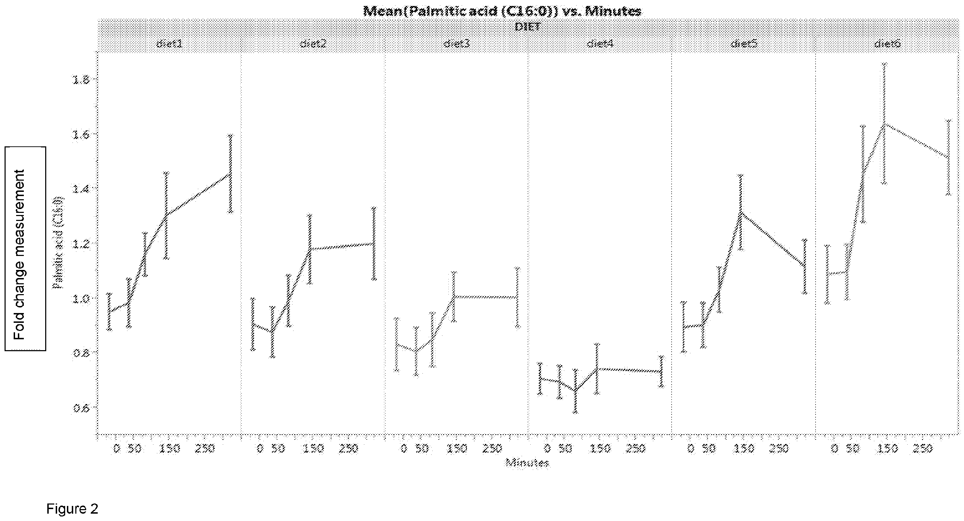

Figure 2: Graph showing plasma levels of saturated free fatty acid palmitic acid in cats fed the diets. The graph shows that cats fed Diet 4 (having P:F of 1 :0.37 gram:gram as fed or dry matter basis) obtained low and stable plasma levels of the saturated free fatty acid palmitic acid compared to the other diets. The y axis is a fold change measurement.

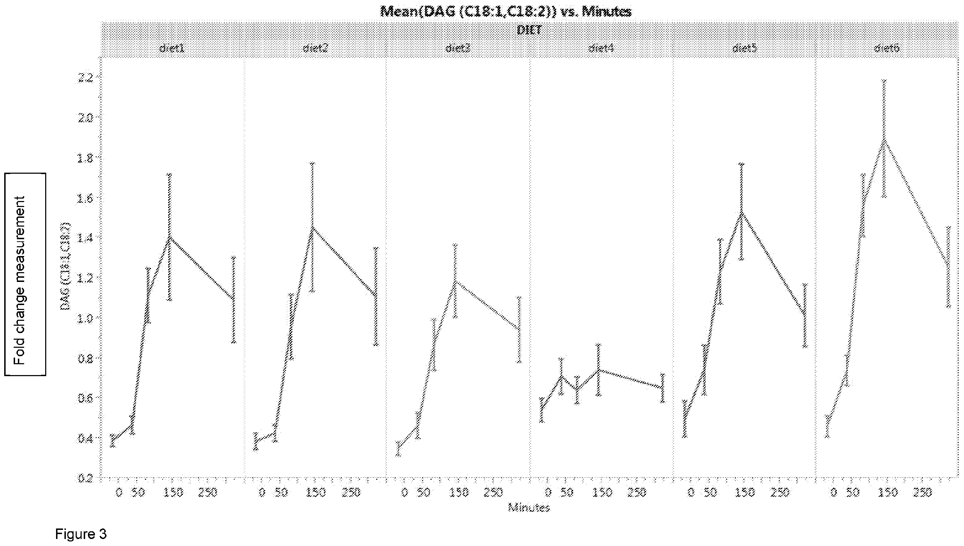

Figure 3: Graph showing plasma levels of diacylglycerol (DAG) in cats fed the diets. The graph shows that cats fed Diet 4 (having P:F of 1:0.37 gram:gram as fed or dry matter basis) obtained stable post-prandial plasma levels of the plasma levels of diacylglycerol (DAG) compared to the other diets. The y axis is a fold change measurement.

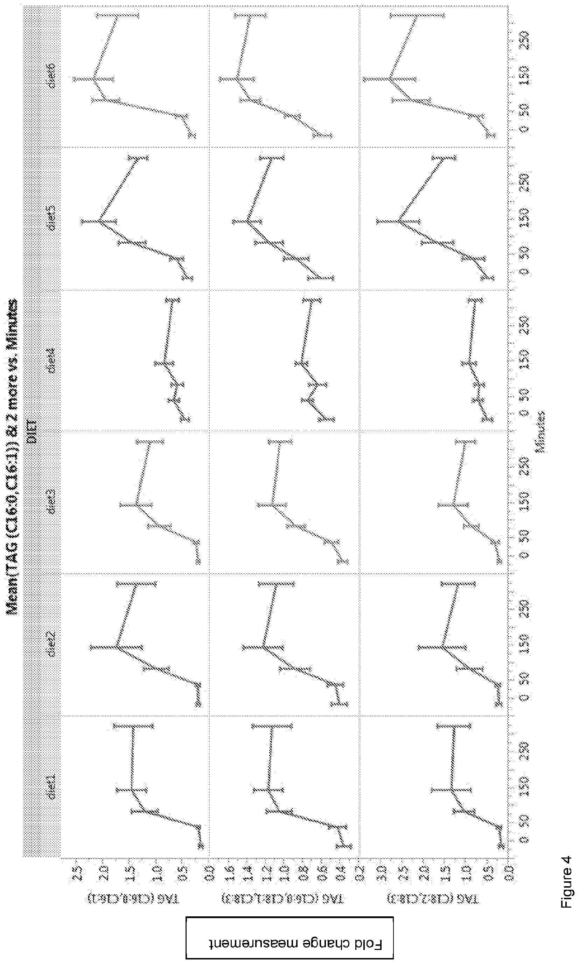

Figure 4: Graph showing plasma levels of various triacylglycerols (TAG) in cats fed the diets. The graph shows that cats fed Diet 4 (having P:F of 1:0.37 gram:gram as fed or dry matter basis) obtained stable post-prandial plasma levels of various triacylglycerols (TAG) compared to the other diets. The y axis is a fold change measurement.

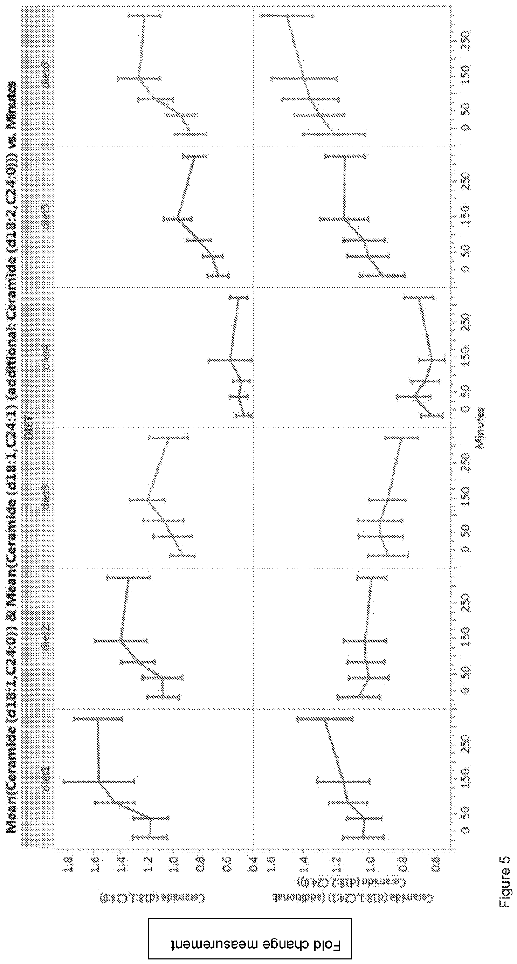

Figure 5: Graph showing plasma levels of ceramides in cats fed the diets. The graph shows that cats fed Diet 4 (having P:F of 1:0.37 gram:gram as fed or dry matter basis) obtained low and stable post-prandial plasma levels of ceramides compared to the other diets. The y axis is a fold change measurement.

### Example

Aim of the study was to determine different benefits from macronutrient diets in cats and to investigate the difference in macronutrient compositions on post-prandial metabolite profiles in cats.

A study was performed in 19 cats aged between 1 and 2 years to investigate the impact of different nutrient diets on the post-prandial gut hormone levels. Four diets (Diet 1, Diet 2, Diet 3 and Diet 4) were used to investigate the levels of lipid metabolites of palmitic acid, diacylglycerol (DAG), triacylglycerols (TAGs) and endogenous levels of margaric acid. In addition, two more diets (Diet 5 and Diet 6) were also used to investigate the levels of lipid metabolites of palmitic acid, diacylglycerol (DAG), triacylglycerols (TAGs). Six diets (labelled Diet 1, Diet 2, Diet 3, Diet 4, Diet 5 and Diet 6) were manufactured using the same raw materials but in different proportions to provide a range of protein to fat ratios. Diet 4 was manufactured to have a protein:fat ratio within the target range of 1:0.27 to 1:0.63 (P:F of 1:0.37). The other diets were manufactured so that protein to fat ratios fell on either side of the target range, as well as within the target range. As can be seen in Table 1, diets 1-3 fell above the target range, whereas diets 5 and 6 fell below the target range and diet 4 fell within the target range.

All cats were fed in four or six consecutive phases of 14 days respectively, in a randomised crossover design with each cat being fed each of the diets in turn. All cats were within 5% of ideal body weight at the start of the trial. For the first 13 days of each phase, cats were fed two meals per day in amounts to maintain a stable, healthy bodyweight. On day 14 of each phase, cats had blood samples taken at 5 time points (one prior to feeding as a baseline and then at 15, 60, 120, & 300 mins following the end of the 20 minute meal).

**Table 1: Diet compositions and ratio of Protein:Fat**

| Diet | Protein g/100g | Carbohydrate g/100g | Fat g/100g | Energy kcal/100g | P:F |
|---|---|---|---|---|---|
| 1 | 7.87 | 2.55 | 11.47 | 132 | 1:1.46 |
| | (low) | (low) | (high) | | |
| 2 | 7.47 | 9.93 | 7.67 | 125 | 1:1.03 |
| | (low) | (medium) | (medium) | | |
| 3 | 7.00 | 12.68 | 5.30 | 119 | 1:0.76 |
| | (low) | (high) | (medium) | | |
| 4 | 10.90 | 2.71 | 4.00 | 95 | 1:0.37 |
| | (high) | (low) | (medium) | | |
| 5 | 10.80 | 4.71 | 2.37 | 82 | 1:0.22 |
| | (high) | (low) | (low) | | |
| 6 | 11.60 | 9.87 | 1.30 | 92 | 1:0.11 |
| | (high) | (high) | (low) | | |

**Table 2: Concentrations of certain amino acids and fatty acids present in the diet associated with the beneficial effects (diet 4).**

| Nutrient | Concentration in diet (g/100g as fed) |
|---|---|
| Aspartic Acid | 0.74 |
| Serine | 0.38 |
| Glutamic Acid | 1.14 |
| Glycine | 0.9 |
| Alanine | 0.6 |
| Proline | 0.55 |
| Myristic Acid | 0.03 |
| Palmitic Acid | 0.58 |
| Stearic Acid | 0.25 |
| Palmitoleic Acid | 0.13 |
| Oleic Acid | 0.90 |
| Linolenic Acid | 0.04 |

### Metabolite profiling

Two types of mass spectrometry analyses were applied to all samples. GC-MS (gas chromatography-mass spectrometry; Agilent 6890 GC coupled to an Agilent 5973 MS-System, Agilent, Waldbronn, Germany) and LC-MS/MS (liquid chromatography-MS/MS; Agilent 1100 HPLC-System (Agilent, Waldbronn, Germany) coupled to an Applied Biosystems API4000 MS/MS-System (Applied Biosystems, Darmstadt, Germany)) were used for broad profiling (van Ravenzwaay et al. 2007).

Proteins were removed from plasma samples (60 µl) by precipitation. Subsequently polar and non-polar fractions were separated for both GC-MS and LC-MS/MS analysis by adding water and a mixture of ethanol and dichloromethane. For GC-MS analyses, the non-polar fraction was treated with methanol under acidic conditions to yield the fatty acid methyl esters derived from both free fatty acids and hydrolyzed complex lipids. The polar and non-polar fractions were further derivatized with O-methyl-hydroxyamine hydrochloride (20 mg/ml in pyridine, 50 µl) to convert oxo-groups to O-methyloximes and subsequently with a silylating agent (MSTFA, 50 µl) before GC-MS analysis. For LC-MS/MS analyses, both fractions were reconstituted in appropriate solvent mixtures. High performance LC (HPLC) was performed by gradient elution using methanol/water/formic acid on reversed phase separation columns. Mass spectrometric detection technology was applied as described in the patent US 7196323, which allows targeted and high sensitivity "Multiple Reaction Monitoring" profiling in parallel to a full screen analysis. To account for inter- and intra-instrumental variation in both GC-MS and LC-MS/MS profiling, data were normalised to the median of reference samples derived from a pool formed from aliquots of all samples from that species. Pooled reference samples were run in parallel through the whole process. The limit of detection and the dynamic range of the semi-quantitative measurements were determined by dilution and spiking experiments during method development. Daily, the signal-to-noise (S/N) ratio threshold of 15 was used for a metabolite to be considered "semi-quantitative".

### Data analysis

Data analysis included univariate statistics (mixed linear models) and multivariate analyses (principal component analysis (PCA)).

### Multivariate statistics

All metabolite data were log-transformed (to ensure an approximate normal distribution), centered and scaled to unit variance. Multivariate analysis was performed using the software Simca (version 13; Umetrics AB, Umeå, Sweden).

### Univariate statistics

For the entire dataset and each individual group to be analyzed statistically, the minimum, maximum, mean and median values were determined. Mean and median values were calculated on a logarithmic scale and then back-transformed to non-logarithmic scale. Figures were constructed in JMP with 95% Confidence Intervals.

The y axis in the figures is a fold change measurement. Fold change is a measure describing how much a quantity changes going from an initial to a final value. For example, an initial value of 30 and a final value of 60 corresponds to a fold change of 1 (or equivalently, a change to 2 times), or in common terms, a one-fold increase.

### Results

Plasma levels of margaric acid were highest in cats on diet 4. As the cats were not fed dairy fat, the levels are not consistent with the amount of fat consumed, it is likely that the elevated margaric acid levels on diet 4 is the result of enhanced endogenous production (Figure 1). The dietary P:F ratio of diet 4 leads to increased endogenous production of margaric acid which supports metabolic health as it is associated with reduced disease risk for coronary heart disease, type 2 diabetes and inflammation.

Margaric acid has been identified as a marker associated with lower risk/incidence of insulin resistance, type 2 diabetes, inflammation and coronary heart disease. Therefore, increasing the endogenous levels of margaric acid as seen with cats fed diet 4 is beneficial for lowering the risk/incidence of insulin resistance, type 2 diabetes, inflammation and coronary heart disease in companion animals.

Fasted plasma levels of a number of lipotoxic lipids, including palmitic acid, diacylglycerol (DAG), triacylglycerols (TAGs) and ceramides were lowest in cats following consumption of the diet with a protein:fat ratio of 1:0.37 (diet 4) and did not increase post-prandially on this diet (Figures 2-5).

Palmitate (palmitic acid) has been shown to increase the expression and secretion of inflammatory cytokines (e.g. IL-6, TNF-α) in adipocytes (Ajuwon & Spurlock 2005, Bradley et al 2008) and muscle cells (Jove et al 2005, Jove et al 2006). Increased inflammatory cytokines cause tissue damage and also contribute to impaired metabolic function (e.g. insulin resistance) in tissues in which they are elevated. Therefore, the fact that plasma palmitic acid levels are lowest in cats fed a diet with a protein:fat ratio of 1:0.37 (diet 4) both in the fasted state and following a meal provides a benefit of reduced inflammation.

Palmitate has been shown to impair insulin signalling pathways which can lead to insulin resistance in multiple tissues (e.g. skeletal muscle cells, adipocytes, hepatocytes) (Chavez & Summers 2003, Nakamura et al 2009, Reynoso et al 2003, Sinha et al 2004, Xi et al 2007). Impaired insulin signaling and insulin resistance result in an inability to effectively take up glucose into cells leading to elevations in blood glucose levels and ultimately to the development of type 2 diabetes mellitus. The results show that the low levels of palmitate in cats fed diet 4 (with a protein:fat ratio of 1:0.37) compared to the elevated levels of palmitate when fed the other 5 diets would reduce the risk of or prevent the development of insulin resistance and type 2 diabetes.

Palmitate also has been shown to induce the accumulation of ceramide and diacylglycerol (DAG) in skeletal muscle cells (Chavez & Summers 2003). These two lipid metabolites have been shown to inhibit insulin signaling in cultured cells and to accumulate in insulin resistant tissues contributing to insulin resistance (Holland et al 2011, Itani et al 2002, Summers 2006, Yu et al 2002). The results show that plasma DAG levels do not increase post-prandially when fed a diet with a protein:fat ratio of 1:0.37 (diet 4), whereas there were large post-prandial increases in DAG levels following consumption of the other 5 diets. Fasted and post-prandial plasma ceramides were lowest when fed diet 4. Since levels of both DAG and ceramides inhibit insulin signaling and contribute to insulin resistance the results show that diet 4 is beneficial in preventing accumulation of these lipid mediators and therefore would reduce the risk of developing insulin resistance and type 2 diabetes. Increased accumulation of ceramides in neuronal cells can lead to apoptosis (a form of cell death) contributing to impaired neurological function and neurodegeneration and therefore a diet that minimized the post-prandial formation of these toxic ceramides (e.g. diet 4) would be beneficial in preventing neuronal cell death and the development of neurological impairment.

## Claims

1. A method for diagnosis that a pet foodstuff provides an increase of endogenous margaric acid level in a cat, said method comprising the steps of:
(a) feeding a cat a foodstuff comprising a protein to fat ratio of 1:0.27 to 1:0.63 on a gram:gram as fed or dry matter basis, and
(b) measuring the level of margaric acid in a blood sample from the cat before and after feeding the foodstuff,
wherein an increase in endogenous margaric acid levels post-prandially is indicative of a foodstuff for preventing and/or reducing the risk of coronary heart disease, type 2 diabetes and/or inflammation in the cat.

2. The method of claim 1, wherein the levels of margaric acid is measured at least once between an hour or immediately before the foodstuff is fed to the cat and at least once between at least 30 minutes to 5 hours after the foodstuff has been fed to the cat.

3. The method of any one of claims 1 to 2, wherein the foodstuff has a protein to fat ratio of 1:0.33 to 1:0.55 on a gram:gram as fed or dry matter basis.

4. The method of any one of claims 1 to 3, wherein the foodstuff has a protein to fat ratio of 1:0.45 on a gram:gram as fed or dry matter basis.

5. The method of any one of claims 1 to 4, wherein the foodstuff has a protein to fat ratio of 1:0.37 on a gram:gram as fed or dry matter basis.

6. The method of any one of claims 1 to 5, wherein the foodstuff is a nutritionally balanced pet foodstuff.

7. The method of any one of claims 1 to 6, wherein a step of formulating a foodstuff comprising a protein to fat ratio of 1:0.27 to 1:0.63 on a gram:gram as fed or dry matter basis occurs prior to the step of feeding the cat the foodstuff.

## Patentansprüche

1. Verfahren zur Diagnose, dass ein Haustiernahrungsmittel eine Erhöhung des endogenen Margarinsäurespiegels in einer Katze bereitstellt, wobei das Verfahren die Schritte umfasst:
(a) Füttern einer Katze mit einem Nahrungsmittel, das ein Protein-zu-Fett-Verhältnis von 1:0,27 bis 1:0,63 auf einer Basis von Gramm:Gramm wie gefüttert oder als Trockenmasse aufweist, und
(b) Messen des Spiegels von Margarinsäure in einer Blutprobe der Katze vor und nach der Fütterung mit dem Nahrungsmittel,
wobei eine Erhöhung der postprandialen endogenen Margarinsäurespiegel für ein Nahrungsmittel zum Verhindern und/oder Verringern des Risikos von koronarer Herzerkrankung, Typ-2-Diabetes und/oder Entzündung bei der Katze indikativ ist.

2. Verfahren gemäß Anspruch 1, wobei die Spiegel von Margarinsäure wenigstens einmal zwischen einer Stunde oder unmittelbar vor dem Füttern des Nahrungsmittels an die Katze und wenigstens einmal zwischen wenigstens 30 Minuten bis 5 Stunden nach dem Füttern des Nahrungsmittels an die Katze gemessen werden.

3. Verfahren gemäß einem der Ansprüche 1 bis 2, wobei das Nahrungsmittel ein Protein-zu-Fett-Verhältnis von 1:0,33 bis 1:0,55 auf einer Basis von Gramm:Gramm wie gefüttert oder als Trockenmasse aufweist.

4. Verfahren gemäß einem der Ansprüche 1 bis 3, wobei das Nahrungsmittel ein Protein-zu-Fett-Verhältnis von 1:0,45 auf einer Basis von Gramm:Gramm wie gefüttert oder als Trockenmasse aufweist.

5. Verfahren gemäß einem der Ansprüche 1 bis 4, wobei das Nahrungsmittel ein Protein-zu-Fett-Verhältnis von 1:0,37 auf einer Basis von Gramm:Gramm wie gefüttert oder als Trockenmasse aufweist.

6. Verfahren gemäß einem der Ansprüche 1 bis 5, wobei das Nahrungsmittel ein ernährungsmäßig ausgewogenes Haustiernahrungsmittel ist.

7. Verfahren gemäß einem der Ansprüche 1 bis 6, wobei ein Schritt des Formulierens eines Nahrungsmittels mit einem Protein-zu-Fett-Verhältnis von 1:0,27 bis 1:0,63 auf einer Basis von Gramm:Gramm wie gefüttert oder als Trockenmasse vor dem Schritt des Fütterns der Katze mit dem Nahrungsmittel erfolgt.

## Revendications

1. Procédé de diagnostic selon lequel un aliment pour animaux de compagnie fournit une augmentation du niveau d'acide margarique endogène chez un chat, ledit procédé comprenant les étapes suivantes :
(a) alimenter un chat avec un aliment comprenant un rapport protéine sur graisse de 1:0,27 à 1:0,63 sur une base gramme : gramme comme matière sèche ou d'alimentation, et
(b) mesurer le niveau d'acide margarique dans un échantillon de sang du chat avant et après l'alimentation avec les aliments,
dans lequel une augmentation des taux d'acide margarique endogène post-prandialement est révélatrice d'un aliment pour prévenir et/ou réduire le risque de coronaropathie, de diabète de type 2 et/ou d'inflammation chez le chat.

2. Procédé selon la revendication 1, dans lequel les niveaux d'acide margarique sont mesurés au moins une fois entre une heure ou immédiatement avant que le chat ne soit alimenté avec les aliments et au moins une fois entre au moins 30 minutes et 5 heures après que le chat a été alimenté avec les aliments.

3. Procédé selon l'une quelconque des revendications 1 à 2, dans lequel les aliments ont un rapport protéine sur graisse de 1:0,33 à 1:0,55 sur une base de gramme:gramme de matière sèche ou d'alimentation.

4. Procédé selon l'une quelconque des revendications 1 à 3, dans lequel les aliments ont un rapport protéine sur graisse de 1:0,45 sur une base de gramme:gramme de matière sèche ou d'alimentation.

5. Procédé selon l'une quelconque des revendications 1 à 4, dans lequel les aliments ont un rapport protéine sur graisse de 1:0,37 sur une base de gramme:gramme de matière sèche ou d'alimentation.

6. Procédé selon l'une quelconque des revendications 1 à 5, dans lequel les aliments sont des produits alimentaires pour animaux de compagnie équilibrés sur le plan nutritionnel.

7. Procédé selon l'une quelconque des revendications 1 à 6, dans lequel une étape de formulation d'un aliment comprenant un rapport protéine sur graisse de 1:0,27 à 1:0,63 sur une base de gramme:gramme de matière sèche ou d'alimentation a lieu avant l'étape d'alimentation du chat avec les aliments.
